# EUROPEAN PATENT APPLICATION

(11) **EP 4 418 380 A2**
(43) Date of publication of application: **21.08.2024**
(21) Application number: 23215330.4
(22) Date of filing: 08.12.2023
(51) Int. Cl.: H01M 10/04, H01M 50/103, H01M 50/166, H01M 50/627

(54) **MANUFACTURING METHOD OF SECONDARY BATTERY**

(30) Priority: 25.01.2023 JP 2023009626
(71) Applicant: Prime Planet Energy & Solutions, Inc., Chuo-ku Tokyo 103-0022 (JP)
(72) Inventor: YONEYAMA, Akihiro, Tokyo, 103-0022 (JP)
(74) Representative: Kuhnen & Wacker Patent- und Rechtsanwaltsbüro PartG mbB

(57) **Abstract**

A herein disclosed manufacturing method includes a battery case assembling step to assemble a battery case, a capacity increasing step at which an inside capacity of the battery case is increased by injecting a gas via an electrolytic solution liquid injection hole to an inside of a battery case having been assembled so as to deform a battery case, a liquid injecting step at which an electrolytic solution is injected via an electrolytic solution liquid injection hole to an inside of a battery case having been deformed, and a sealing step to seal a battery case on which a liquid injection has been performed. Furthermore, regarding the herein disclosed manufacturing method, at the capacity increasing step, a regulation jig is used to regulate a deformation of a part of a side wall. By doing this, it becomes easier to control a deformed position or a deformed amount.

## Description

### BACKGROUND

### 1. Technical Field

A technique disclosed herein relates to a manufacturing method of a secondary battery.

### 2. Description of the Related Art

The secondary battery, such as lithium ion secondary battery, has been widely used in various fields. This secondary battery has, for example, a configuration in which an electrode body and an electrolytic solution are accommodated inside a battery case. At that time, the most portion of the electrolytic solution is osmosed to an inside of the electrode body. In addition, the battery case of the secondary battery is provided with an electrolytic solution liquid injection hole that is configured to perform a liquid injection of the electrolytic solution. This electrolytic solution liquid injection hole is sealed by a sealing member after the liquid injection of the electrolytic solution is performed.

Japanese Patent Application Publication No. 2018-170210 discloses an example of a method for manufacturing the secondary battery including the above described configuration. The manufacturing method described in this Patent Document 1 includes a liquid injecting step at which the electrolytic solution is injected into a container having accommodated the electrode body, an inside capacity expanding step at which a capacity of the container is expanded, and a decompressing step at which the container is decompressed. By doing this, it is possible to suppress the electrolytic solution from gushing out, at the decompressing step, from a liquid injection port after the liquid injection is performed.

### SUMMARY

Anyway, the electrolytic solution having been injected into the battery case is once held in an excess space between the battery case and the electrode body, and then gradually osmosed to the inside of the electrode body over a long time (for example, several hours to several days). On the other hand, recently, as the electrode body becomes larger, the excess space tends to be narrower which is configured to hold the electrolytic solution before the osmose. In that case, even if the excess space is filled with the electrolytic solution, it is difficult to supply a sufficient amount of electrolytic solution to the whole of the electrode body. Accordingly, at the recent liquid injecting step, it is required to divisionally inject the electrolytic solution for plural times, which causes a reduction in a manufacture efficiency.

The herein disclosed technique has been made in view of the above described problems, and has an object to provide a technique that can increase a holding amount of the electrolytic solution inside the battery case, and that can suppress the reduction in the manufacture efficiency.

In order to implement the above described object, the herein disclosed technique provides a manufacturing method of a secondary battery including a below described configuration (hereinafter, simply referred to as "manufacturing method", too).

The herein disclosed manufacturing method is to manufacture a secondary battery that includes an electrode body including a positive electrode and a negative electrode, includes an electrolytic solution, and includes a battery case configured to accommodate an electrode body and an electrolytic solution. This battery case of the secondary battery includes an outer case including a bottom part formed in a plate shape, a side wall extending upward from an outer peripheral edge of a bottom part, and an upper surface opening surrounded by a top end of a side wall, and includes a sealing plate configured to seal an upper surface opening and provided with an electrolytic solution liquid injection hole. Then, the herein disclosed manufacturing method includes: a battery case assembling step for sealing an upper surface opening by a sealing plate under a state where an electrode body is arranged inside an outer case, so as to assemble a battery case; a capacity increasing step for increasing an inside capacity of a battery case by injecting a gas via an electrolytic solution liquid injection hole to an inside of a battery case having been assembled so as to deform a battery case; a liquid injecting step for injecting an electrolytic solution via an electrolytic solution liquid injection hole to an inside of a battery case having been deformed; and a sealing step for sealing an electrolytic solution liquid injection hole of a battery case into which an electrolytic solution has been injected. Then, in the herein disclosed manufacturing method, at the capacity increasing step, a regulation jig is used to regulate a deformation of a part of a side wall.

The herein disclosed manufacturing method includes a capacity increasing step for injecting a gas via an electrolytic solution liquid injection hole to an inside of a battery case having been assembled so as to deform a battery case. By doing this, a whole deformation due to the expansion occurring from the inside, not a local deformation due to an external force, is caused on the battery case. Thus, it is possible to remarkably increase the inside capacity of the battery case, in comparison with a conventional technique. As this result, it is possible to reduce a number of performing the liquid injection of the electrolytic solution, and to suppress a reduction in the manufacture efficiency. Additionally, in the herein disclosed manufacturing method, at a capacity increasing step, a regulation jig is used to regulate a part of a deformation of a side wall. By doing this, it is possible to control a deformed position or a deformed amount at the capacity increasing step.

### BRIEF DESCRIPTION OF THE DRAWINGS

FIG. 1 is a perspective view that schematically shows an appearance of a secondary battery manufactured by a manufacturing method in accordance with Embodiment 1.
FIG. 2 is a longitudinal cross section view that schematically shows an inside structure of the secondary battery shown in FIG. 1.
FIG. 3 is a flowchart for explaining a manufacturing method in accordance with Embodiment 1.
FIG. 4 is a perspective view that is to explain a connection of a sealing plate and an electrode body at a battery case assembling step.
FIG. 5 is a longitudinal cross section view that is to explain a capacity increasing step of Embodiment 1.
FIG. 6 is a side view that is to explain the capacity increasing step of Embodiment 1.
FIG. 7 is a VII-VII cross section view of FIG. 6.
FIG. 8 is a longitudinal cross section view that is to explain a liquid injection of an electrolytic solution at a liquid injecting step.
FIG. 9 is a side view that is to explain the capacity increasing step of Embodiment 2.
FIG. 10 is a X-X cross section view of FIG. 9.
FIG. 11 is a side view that is to explain the capacity increasing step of Embodiment 3.
FIG. 12 is a XII-XII cross section view of FIG. 11.
FIG. 13 is a longitudinal cross section view that is to explain the capacity increasing step of Embodiment 4.
FIG. 14 is a side view that is to explain the capacity increasing step of Embodiment 5.
FIG. 15 is a XV-XV cross section view of FIG. 14.

### DETAILED DESCRIPTION

Below, one embodiment of a herein disclosed technique will be described in detail, by reference to the accompanying drawings. Incidentally, the matters other than matters particularly mentioned in this specification, and required for practicing the herein disclosed technique can be grasped as design matters of those skilled in the art based on the related art in the present field. The herein disclosed technique can be executed based on the contents disclosed in the present specification, and the technical common sense in the present field. Additionally, in the following drawings, it will be explained while the members/parts providing the same effect are provided with the same numerals and signs. Furthermore, the dimensional relation (such as length, width, and thickness) in each drawing does not reflect the actual dimensional relation.

In the present specification, a term "secondary battery" generally represents an electric storage device that can repeatedly perform a charge and discharge by moving a charge carrier between a positive electrode and a negative electrode via an electrolyte. The above described "secondary battery" semantically covers a so-called storage battery, such as lithium ion secondary battery, nickel hydrogen battery, and nickel cadmium battery, additionally a capacitor, such as electric double layer capacitor, and the like. In other words, the herein disclosed manufacturing method is not restricted to a method for manufacturing a specific kind of battery, and can be widely applied to a manufacture of a general electric storage device in which the electrode body and the electrolytic solution are accommodated inside the battery case.

### <Embodiment 1>

Below, Embodiment 1 of a manufacturing method disclosed herein will be described.

### 1. Structure of secondary battery

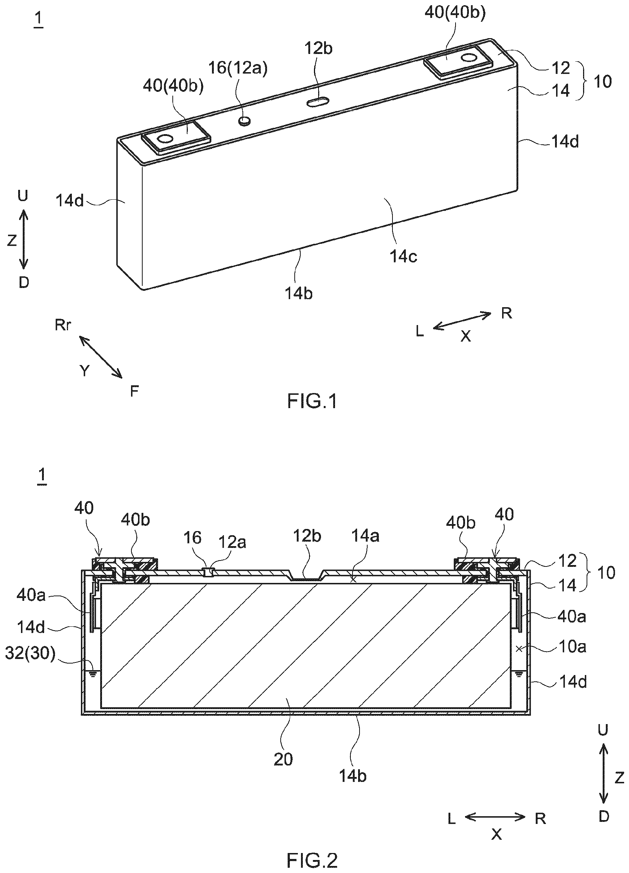

At first, a structure of the secondary battery being a manufacture target of the manufacturing method in accordance with the present embodiment will be explained. FIG. 1 is a perspective view that schematically shows an appearance of the secondary battery manufactured by the manufacturing method in accordance with Embodiment 1. FIG. 2 is a longitudinal cross section view that schematically shows an inside structure of the secondary battery shown in FIG. 1. Incidentally, in FIG. 1 and FIG. 2, a reference sign X represents a width direction, a reference sign Y represents a depth direction, and a reference sign Z represents a height direction. Furthermore, reference signs L, R, F, Rr, U, and D respectively represent leftward, rightward, frontward, rearward, upward, and downward. However, these directions are defined for convenience sake of explanation, and are not intended to restrict a disposed aspect of the secondary battery during use or during manufacture.

As shown in FIG. 1 and FIG. 2, the secondary battery 1 in the present embodiment includes a battery case 10, an electrode body 20, and an electrolytic solution 30. Below, each member configuring the secondary battery 1 will be particularly explained.

### (1) Battery case

The battery case 10 in the present embodiment is a container formed in a box shape and having an internal space 10a. In the internal space 10a of this battery case 10, the electrode body 20 and the electrolytic solution 30 are accommodated. As shown in FIG. 1 and FIG. 2, the battery case 10 in the present embodiment is a container formed in a flat rectangular parallelepiped shape. In addition, it is preferable that the battery case 10 is a metal member whose strength is equal to or more than a certain level. As an example of a material of the battery case 10, it is possible to use aluminum, aluminum alloy, or the like. Incidentally, although it is not intended to restrict a herein disclosed technique, an inside capacity of the battery case 10 is preferably equal to or more than 500 cm³, or further preferably equal to or more than 1000 cm³. The secondary battery 1 having a large capacity as described above requires a large amount of the electrolytic solution 30, and thus an effect of the herein disclosed technique will be further suitably exhibited. Incidentally, an upper limit of an inside capacity of the battery case 10, which is not particularly restricted, might be equal to or less than 3000 cm³, or might be equal to or less than 1500 cm³. In addition, the herein disclosed technique can be applied to a small battery being equal to or less than 300 cm³ (typically, equal to or less than 150 cm³).

In addition, the battery case 10 in the present embodiment includes an outer case 14 and a sealing plate 12. Below, each member will be described.

### (a) Outer case

The outer case 14 is a box-shaped body whose upper surface is opened. In particular, the outer case 14 includes a bottom part 14b formed in a plate shape, side walls 14c, 14d extending upward D from an outer peripheral edge of the bottom part 14b, and an upper surface opening 14a surrounded by top ends of the side walls 14c, 14d. Incidentally, as described above, the battery case 10 shown in FIG. 1 and FIG. 2 is a case formed in a flat rectangular parallelepiped shape. In a situation of the battery case 10 having an outer shape described above, the bottom part 14b of the outer case 14 is a long rectangular plate-shaped member. Then, the side walls 14c, 14d include a pair of first side walls 14c extending upward U from long sides (sides along the width direction X) of the bottom part 14b and a pair of second side walls 14d extending upward U from short sides (sides along the depth direction Y) of the bottom part 14b. In other words, the first side wall 14c is a side wall whose area size is relatively large. On the other hand, the second side wall 14d is a side wall whose area size is relatively small. Regarding the battery case 10 formed in the flat rectangular parallelepiped shape described above, the first side wall 14c is preferentially deformed (expanded) when an internal pressure is increased. Thus, it becomes easy to control a deformed position or a deformed amount at a later described capacity increasing step S20.

In addition, a particular size of the outer case 14 can be suitably changed unless the effect of the herein disclosed technique is significantly inhibited. For example, a height (size in the height direction Z) of the first side wall 14c is preferably equal to or more than 5 cm, or further preferably equal to or more than 8 cm. Then, a width (size in the width direction X) of the first side wall 14c is preferably equal to or more than 20 cm, or further preferably equal to or more than 25 cm. As described above, by forming the first side wall 14c having the height and width (in other words, area size) equal to or more than a certain size, it becomes easier to deform the first side wall 14c at the capacity increasing step S20. On the other hand, upper limits of the height and the width of the first side wall 14c are not particularly restricted. For example, the height of the first side wall 14c is equal to or less than 12 cm, or equal to or less than 10 cm. In addition, the width of the first side wall 14c is equal to or less than 35 cm, or equal to or less than 30 cm. Incidentally, an aspect ratio of the first side wall 14c (ratio of the height with respect to the width) is preferably equal to or more than 2, or further preferably equal to or more than 3. By doing this, it becomes furthermore easier to deform the first side wall 14c. On the other hand, an upper limit of the aspect ratio of the first side wall 14c, which is not particularly restricted, might be equal to or less than 8, or might be equal to or less than 5.

In addition, a width (size in the depth direction Y) of the second side wall 14d is preferably equal to or less than 5 cm, or further preferably equal to or less than 4 cm. As described above, by making the width of the second side wall 14d be narrower, it is possible to suitably suppress the deformation of the second side wall 14d. On the other hand, a lower limit of the width of the second side wall 14d, which is not particularly restricted, might be equal to or more than 1 cm, or might be equal to or more than 3 cm. Incidentally, a height of the second side wall 14d is set to be a height the same as the first side wall 14c.

In addition, a thickness (size in the depth direction Y) of the first side wall 14c is preferably equal to or less than 3 mm, further preferably equal to or less than 2 mm, or furthermore preferably equal to or less than 1.5 mm. By doing this, it becomes easier to deform the first side wall 14c. On the other hand, from a perspective of securing a strength of the battery case 10, a thickness of the first side wall 14c is preferably equal to or more than 0.15 mm, or further preferably equal to or more than 0.2 mm. On the other hand, it is preferable that the bottom part 14b or the second side wall 14d is thicker than the first side wall 14c. By doing this, it becomes furthermore easier to deform the first side wall 14c. Incidentally, a particular thickness of the bottom part 14b is preferably equal to or more than 0.5 mm, or further preferably equal to or more than 1 mm. By doing this, it is possible to suitably suppress the deformation of the bottom part 14b. On the other hand, in consideration of a weight or a material cost of the secondary battery 1, the thickness of the bottom part 14b is preferably equal to or less than 4 mm, further preferably equal to or less than 3 mm, or furthermore preferably equal to or less than 2.5 mm. In addition, a thickness (size in the width direction X) of the second side wall 14d is preferably equal to or more than 0.15 mm, or further preferably equal to or more than 0.2 mm. By doing this, it is possible to suppress the deformation of the second side wall 14d. On the other hand, in consideration of a weight or a material cost of the secondary battery 1, the thickness of the second side wall 14d is preferably equal to or less than 3 mm, further preferably equal to or less than 2 mm, or furthermore preferably equal to or less than 1.5 mm.

### (b) Sealing plate

The sealing plate 12 is a plate-shaped member that is configured to seal the upper surface opening 14a of the outer case 14. On this sealing plate 12, an electrolytic solution liquid injection hole 12a is provided to inject the electrolytic solution 30 to an inside of the battery case 10. On the secondary battery 1 after the manufacture, the electrolytic solution liquid injection hole 12a is sealed by the sealing member 16. Incidentally, it is preferable that the sealing plate 12 is also thicker than the first side wall 14c. By doing this, it is possible to suppress the deformation of the sealing plate 12 at the capacity increasing step S20. In particular, the thickness of the sealing plate 12 is preferably equal to or more than 1 mm, or further preferably equal to or more than 1.5 mm. On the other hand, in consideration of a weight or a material cost of the secondary battery 1, the thickness of the sealing plate 12 is preferably equal to or less than 5 mm, or further preferably equal to or less than 4 mm.

Additionally, on the sealing plate 12 in the present embodiment, a gas exhaust valve 12b is formed. The gas exhaust valve 12b is a thin-walled part formed to have a thickness being thinner than the other portion of the sealing plate 12. This gas exhaust valve 12b is cleaved when the internal pressure of the battery case 10 drastically rises due to generation of a decomposition gas, or the like. By doing this, it is possible to inhibit an excess deformation of the secondary battery 1 during a charge and discharge. Incidentally, the thickness of the gas exhaust valve 12b is preferably equal to or less than 0.5 mm, or further preferably equal to or less than 0.3 mm. By doing this, it is possible to properly operate the gas exhaust valve 12b when the internal pressure rises during the charge and discharge. On the other hand, a lower limit of the thickness of the gas exhaust valve 12b is preferably equal to or more than 0.05 mm, or further preferably equal to or more than 0.1 mm. By doing this, it is possible to suppress a malfunction of the gas exhaust valve 12b at the capacity increasing step S20.

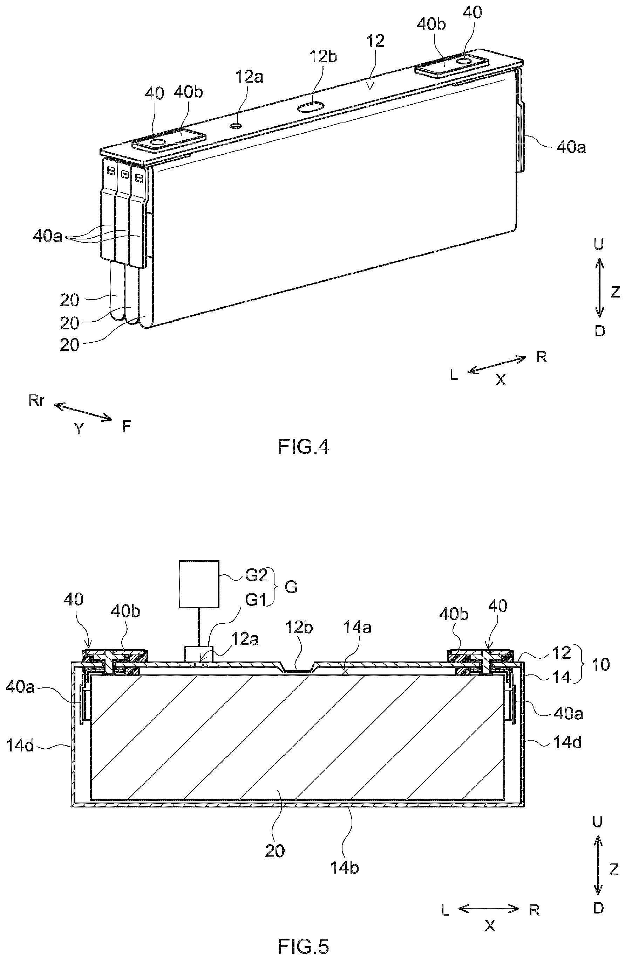

In addition, on the sealing plate 12, a pair of electrode terminals 40 are attached. Each of the electrode terminals 40 is a structure body in which plural conductive members are combined, and which extends along the height direction Z. Then, an electrical collector member 40a configuring a lower end part of the electrode terminal 40 is connected to the electrode body 20 inside the battery case 10. Incidentally, as shown in FIG. 4, according to the present embodiment, each of the pair of electrode terminals 40 includes plural (3 in FIG. 4) electrical collector members 40a. On the other hand, an outside terminal 40b configuring a top end part of the electrode terminal 40 is exposed to an outside of the battery case 10. Incidentally, as a structure of the electrode terminal 40, it is possible to use a structure capable of being applied to a general secondary battery without particular restriction, and a detailed explanation of it is omitted because it is not to restrict the herein disclosed technique.

### (2) Electrode body

As described above, the electrode body 20 is accommodated inside the battery case 10. As shown in FIG. 4, according to the present embodiment, the plural (3 in FIG. 4) electrode bodies 20 are accommodated inside the battery case 10. However, the number of the electrode bodies 20 is not particularly restricted, and might be 1. In addition, as the illustration is omitted, an insulation sheet is arranged between the electrode body 20 and the outer case 14. By doing this, it is possible to inhibit a conduction between the electrode body 20 and the battery case 10.

The electrode body 20 includes a positive electrode and a negative electrode. The electrode body 20 in the present embodiment is a wound electrode body formed in a flat shape. In particular, the electrode body 20 is formed by winding a laminate body that is consisted by laminating a long sheet-shaped positive electrode and negative electrode via a separator. Incidentally, as a material of each member (positive electrode, negative electrode, separator, or the like) configuring the electrode body 20, it is possible to use a material capable of being utilized in the general secondary battery without particular restriction, and a detailed explanation of it is omitted because it is not to restrict the herein disclosed technique. In addition, the electrode body 20 is accommodated in the battery case 10 to make a winding axis of it be along the long side of the bottom part 14b of the outer case 14. Thus, in the secondary battery 1 of the present embodiment, a flat surface of the electrode body 20 and the first side wall 14c of the outer case 14 are opposed.

Incidentally, a size of the electrode body 20 is not particularly restricted, and suitably adjusted in consideration of a relation between a battery performance and a production efficiency. In particular, the excess space (the inside capacity of the battery case - the volume of the electrode body) of the battery case 10 is increased by reducing a size of the electrode body 20, and thus it is possible to increase an injected liquid amount at a later described liquid injecting step S30. By doing this, it is possible to contribute in enhancing the production efficiency. From a perspective described above, it is preferable to set a size of the electrode body 20 so as to make the excess space inside the battery case 10 be equal to or more than 50 cm³ (further suitably equal to or more than 100 cm³, or furthermore suitably equal to or more than 150 cm³). On the other hand, by increasing the size of the electrode body 20, it is possible to enhance a battery performance of the battery capacity or the like. From a perspective described above, it is preferable to set the size of the electrode body 20 so as to make the excess space inside the battery case 10 be equal to or less than 250 cm³ (further suitably, equal to or less than 200 cm³, or furthermore suitably equal to or less than 170 cm³). Incidentally, the herein disclosed manufacturing method can increase the inside capacity of the battery case 10 at the capacity increasing step S20, and thus it is possible to suitably inhibit a reduction in the production efficiency even in a case where the excess space in the battery case 10, just after the battery case assembling step S10, is equal to or less than 170 cm³.

### (3) Electrolytic solution

The electrolytic solution 30 is, together with the electrode body 20, accommodated inside the battery case 10. In particular, the electrolytic solution 30 is osmosed to an inside of the electrode body 20 (electrode gap between the positive electrode and the negative electrode). In addition, a part of the electrolytic solution 30 might exist as an excess electrolytic solution 32 at an outside of the electrode body 20 (between the electrode body 20 and the battery case 10). By doing this, when the electrode body 20 is decomposed at the inside of the electrolytic solution 30, it is possible to supply the excess electrolytic solution 32 to the inside of the electrode body 20. Incidentally, as a component of the electrolytic solution 30, it is possible to use one capable of being utilized in the general secondary battery without particular restriction, and a detailed explanation of it is omitted because it is not to restrict the herein disclosed technique.

### 2. Manufacturing method of secondary battery

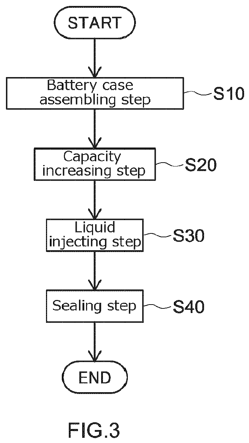

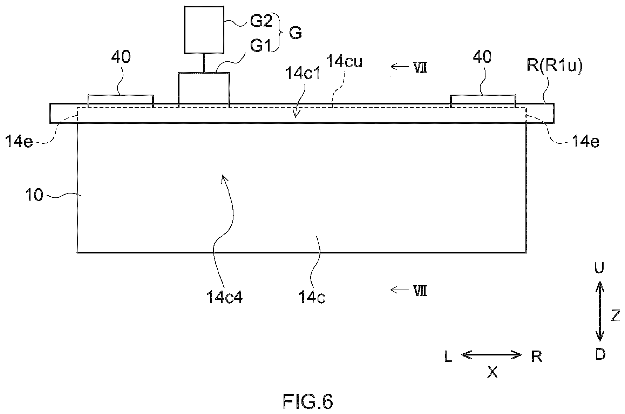

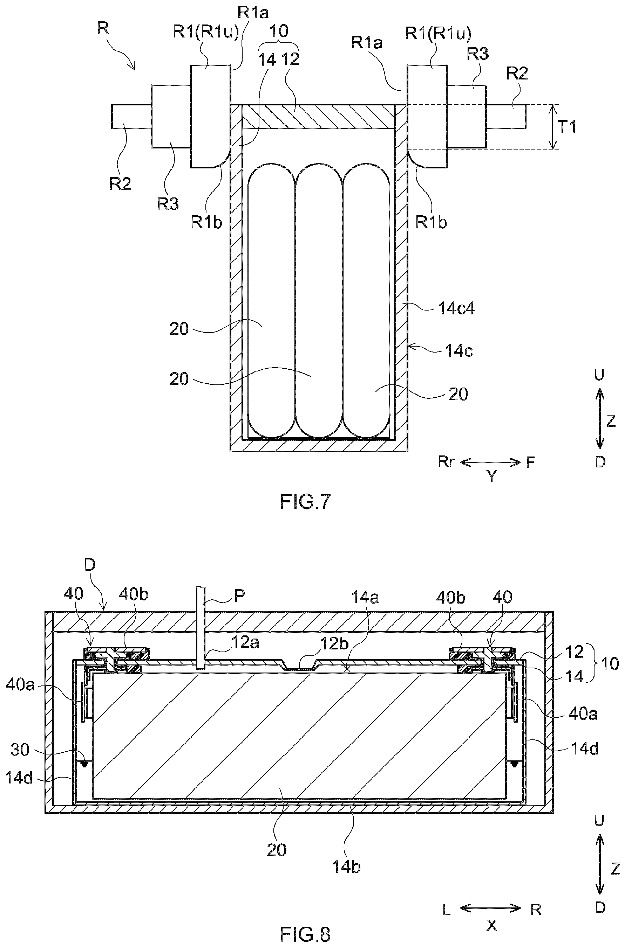

Then, one embodiment of the manufacturing method of the secondary battery disclosed herein will be described. FIG. 3 is a flowchart that is for explaining the manufacturing method in accordance with Embodiment 1. In addition, FIG. 4 is a perspective view that is for explaining a connection between the sealing plate and the electrode body at the battery case assembling step. FIG. 5 is a longitudinal cross section view that is to explain the capacity increasing step of Embodiment 1. In addition, FIG. 6 is a side view that is to explain the capacity increasing step of Embodiment 1. In addition, FIG. 7 is a VII-VII cross section view of FIG. 6. FIG. 8 is a perspective view that is to explain a liquid injection of the electrolytic solution at the liquid injecting step.

As shown in FIG. 3, the manufacturing method in accordance with the present embodiment includes at least the battery case assembling step S10, the capacity increasing step S20, the liquid injecting step S30, and the sealing step S40. Below, each of the steps will be described.

### (1) Battery case assembling step S10

At the present step, the upper surface opening 14a is sealed by the sealing plate 12 under a state where the electrode body 20 is arranged inside the outer case 14, so as to assemble the battery case 10. An example of a particular procedure of the present steps will be described below. At first, as shown in FIG. 4, the electrical collector member 40a of the electrode terminal 40 is connected to each of the plural electrode bodies 20. By doing this, the sealing plate 12 and the electrode body 20 are integrated. Under this state, the electrode body 20 is inserted from the upper surface opening 14a to the inside of the outer case 14. Then, by further lowering the electrode body 20 and the sealing plate 12, the upper surface opening 14a of the outer case 14 is closed by the sealing plate 12. Then, top ends of the side walls 14c, 14d of the outer case 14 and an outer periphery edge part of the sealing plate 12 are joined. By doing this, it is possible to construct the battery case 10 in which the electrode body 20 is accommodated at the internal space 10a. Incidentally, as for joining the sealing plate 12 and the outer case 14, it is possible to use a conventionally known joining means without particular restriction. As a suitable example of the joining means described above, it is possible to use a laser welding or the like.

### (2) Capacity increasing step S20

At the present step, by injecting a gas via the electrolytic solution liquid injection hole 12a to the inside of the battery case 10 after the assembly so as to deform the battery case 10, the inside capacity of the battery case 10 is increased. As an example, at the present step, a gas supplying means G as shown in FIG. 5 is used. The gas supplying means G includes a supply port G1 and a gas generation source G2. The supply port G1 is configured to seal the inside of the battery case 10 when attached to the electrolytic solution liquid injection hole 12a. On the other hand, as the gas generation source G2, various equipments configured to induce a high pressure gas (compressor, gas cylinder, or the like) can be used. Then, at the present step, the supply port G1 is attached to the electrolytic solution liquid injection hole 12a, and then the gas generation source G2 is driven. By doing this, the case internal pressure rises so that the side walls 14c, 14d (for example, the first side wall 14c) are deformed (expanded), as a whole. As this result, the inside capacity of the battery case 10 is greatly increased.

In addition, it is preferable that the gas supply condition (gas pressure, supply time, or the like) at the present step is adjusted to make the battery case 10 be expanded at an extent equal to or more than a certain level. By doing this, a plastic deformation is caused on the battery case 10, and thus it tends to facilitate keeping the inside capacity, which is increased at the capacity increasing step S20, until the liquid injecting step S30 is started. For example, in a case where an increase amount of the inside capacity of the battery case 10 at the capacity increasing step S20 is treated as 100%, it is preferable to set a gas supply condition so as to keep the increase amount of the inside capacity of the battery case 10, at the time when the liquid injecting step S30 is started, being equal to or more than 10% (further suitably equal to or more than 30%, or further more suitably equal to or more than 50%). By doing this, it is possible to suitably increase the electrolytic solution amount capable of being injected at the liquid injecting step S30. Incidentally, an upper limit value of the increase amount of the inside capacity at the start time of the liquid injecting step S30, which is not particularly restricted, might be equal to or less than 100% (no contraction after the capacity increasing step S20), or might be equal to or less than 75%.

In addition, the increase amount of the inside capacity at the capacity increasing step S20 is preferably equal to or more than 40 cm³, further preferably equal to or more than 70 cm³, or furthermore preferably equal to or more than 100 cm³. By doing this, the plastic deformation of the battery case 10 is properly caused, and thus it becomes easy to keep the increase amount of the inside capacity until the liquid injecting step S30 is started. On the other hand, it is preferable that the increase amount of the inside capacity is set in a range where a breakage of the battery case 10 (the gas exhaust valve 12b, a join portion with the sealing plate 12 and the outer case 14, or the like) can be inhibited. Particularly, the upper limit value of the increase amount of the inside capacity is preferably equal to or less than 200 cm³, further preferably equal to or less than 150 cm³, or preferably in particular equal to or less than 120 cm³.

Incidentally, the pressure of the gas supplied to the battery case 10 is preferably equal to or more than 0.03 MPa, further preferably equal to or more than 0.05 MPa, or preferably in particular equal to or more than 0.10 MPa. By doing this, it is possible to properly cause the plastic deformation of the battery case 10. On the other hand, the upper limit of the gas pressure is preferably equal to or less than 0.20 MPa, further preferably equal to or less than 0.15 MPa, or preferably in particular equal to or less than 0.12 MPa. By doing this, it is possible to suppress the breakage of the battery case 10. In addition, the gas supply time is preferably equal to or more than 5 sec, further preferably equal to or more than 10 sec, or furthermore preferably equal to or more than 12 sec. By doing this, it is possible to properly cause the plastic deformation of the battery case 10. On the other hand, from a perspective of shortening the manufacture time, the gas supply time is preferably equal to or less than 30 sec, or further preferably equal to or less than 20 sec. In addition, the gas used at the present step is not particularly restricted unless significantly inhibiting the performance of the secondary battery 1 after the manufacture. As an example of the gas described above, it is possible to use air, helium gas, nitrogen gas, argon gas, or the like. In addition, from a perspective of suppressing the performance reduction due to a moisture contamination, it is preferable that a dry processing is performed on the gas before the battery case 10 is supplied.

Incidentally, as described above, by using the flat battery case 10, the first side wall 14c whose area size is relatively large is preferentially expanded, and thus it becomes easy to manage the deformed position or the deformed amount at the present step. Incidentally, based on an experiment performed by the present inventor, it is observed on the first side wall 14c after the deformation that a portion a little upward more than a center portion in the height direction Z is expanded the most. Particularly, in a case where a height size of the first side wall 14c is treated as 100%, the first side wall 14c is expanded to generate an apex in a range of 50.5% to 52.5% from the lower end (for example, position about 51%). In addition, it is also observed that, if the flat battery case 10 is expanded, the second side wall 14d whose area size is relatively smaller is recessed a little toward the inside of the battery case 10.

Then, as shown in FIG. 6 and FIG. 7, regarding the manufacturing method in accordance with the present embodiment, at the capacity increasing step S20, a regulation jig R is used to regulate a deformation of a part of the side walls 14c, 14d. As shown in FIG. 7, in the present embodiment, a pair of regulation jigs R opposed to sandwich the battery case 10 in the depth direction Y are used. Each of these pair of regulation jigs R includes a regulating part R1, a sliding part R2, and a fixing part R3. The regulating part R1 is a member including a regulation surface R1a opposed to a part of the side walls 14c, 14d of the outer case 14. In this regulating part R1, a material having a predetermined rigidity is used. As the material of this regulating part R1, it is possible to use a metal material (aluminum, or the like), and a resin material (polyacetal (POM), poly carbonate (PC), or the like). In addition, the sliding part R2 is a rod-shaped member extending along a direction (depth direction Y in FIG. 7) crossing to surfaces of the side walls 14c, 14d. By sliding the regulating part R1 along this sliding part R2, it is possible to make the regulating part R1 be disposed closer to or far away from the side walls 14c, 14d. In addition, the fixing part R3 is a member to restrict the sliding of the regulating part R1 along the sliding part R2 at a desired position.

Then, at the capacity increasing step S20 in the present embodiment, at first, the battery case 10 is arranged between the pair of regulation jigs R. Next, the regulating part R1 is made to slide along the sliding part R2, so as to make the regulation surface R1a of this regulating part R1 abut on a part of the side wall 14c of the outer case 14. Then, under this state, the fixing part R3 is attached to the sliding part R2, so as to restrict the slide of the regulating part R1. When a gas is injected into the battery case 10 after the regulation jig R is attached as described above, a deformation of an area, on which the regulating part R1 abuts, among the side wall 14c of the outer case 14, is regulated, and an area, on which the regulating part R1 does not abut, is deformed (expanded). As described above, according to the present embodiment, it is possible to control a deformed position or a deformed amount of the battery case 10 at the capacity increasing step S20.

Additionally, in the present embodiment, the regulating part R1 includes a top end regulating part R1_{U} that is configured to abut on a top end part 14c1 of the first side wall 14c. As shown in FIG. 6, the wording "top end part 14c1 of the first side wall 14c" in the present specification means an area extending along a top end 14cu (along the width direction X in FIG. 6) to contain the top end 14cu of the first side wall 14c. As shown in FIG. 7, this top end part 14c1 of the first side wall 14c is an area where the sealing plate 12 seals the upper surface opening 14a of the outer case 14. If this top end part 14c1 of the first side wall 14c is deformed (expanded), there is a fear that a gap is caused between the sealing plate 12 and the outer case 14 so as to reduce a sealing property. Particularly, in a case where the sealing plate 12 and the outer case 14 are joined (subjected to laser welding, or the like), this join portion might be broken. With respect to this matter, in the present embodiment, the top end regulating part R1_{U} is used to regulate the deformation of the top end part 14c1 of the first side wall 14c. By doing this, it is possible to inhibit a reduction in the sealing property of the battery case 10.

Incidentally, a height size T1 of an area (the top end part 14c1) where the top end regulating part R1_{U} abuts on the first side wall 14c is preferably equal to or more than 2 mm, further preferably equal to or more than 3 mm, or furthermore preferably equal to or more than 4 mm. By doing this, it is possible to properly inhibit the deformation of the top end part 14c1 of the first side wall 14c. On the other hand, it is preferable that the height size T1 of the top end part 14c1 is set to abut on an upward area more than the electrode body 20. For example, the height size T1 of the area (the top end part 14c1) where the top end regulating part R1_{U} abuts on the first side wall 14c, from the top end of the first side wall 14c, is preferably equal to or less than 8 mm, further preferably equal to or less than 7 mm, or furthermore preferably equal to or less than 6 mm. By doing this, it is possible to sufficiently secure a deformed amount (an increase amount of the inside capacity) of the battery case 10 at the capacity increasing step S20.

Incidentally, the top end regulating part R1_{U} shown in FIG. 6 regulates the deformation of the top end part 14c1 of the first side wall 14c over a whole area in the width direction X. However, a size of the top end regulating part R1_{U} in the width direction X is not restricted to a form shown in FIG. 6. For example, the deformation due to a rise of the internal pressure is hardly caused on both-sides edge parts in the width direction X (a vicinity of corner part 14e of the outer case 14). Thus, the top end regulating part R1_{U} might be configured to abut only on a center part of the top end part 14c1 in the width direction X, but not abut on the both-sides edge parts.

In addition, as described above, the regulating part R1 of the regulation jig R in the present embodiment includes the regulation surface R1a opposed to the first side wall 14c. Then, as shown in FIG. 7, this regulation surface R1a includes a chamfering part R1b formed at a corner part positioned at a center part 14c4 side (at a downward D side in the height direction Z) of the first side wall 14c. By doing this, it is possible to suppress the breakage of the side wall 14c of the first side wall 14c at the capacity increasing step S20. Particularly, in the present embodiment, the deformation of the center part 14c4 of the first side wall 14c is not regulated, and thus the center part 14c4 is mainly expanded. At that time, if the expanded center part 14c4 comes into contact with the corner part of the regulation surface R1a, there is a fear that the center part 14c4 is broken. With respect to this matter, in the present embodiment, a chamfering part R1b is formed on the regulating part R1, and thus it is possible to inhibit the expanded center part 14c4 from coming into contact with the corner part of the regulation surface R1a. Incidentally, the chamfering part R1b shown in FIG. 7 is a R part in which the corner part of the regulation surface R1a is rounded by a predetermined curvature radius. This curvature radius of the R part is preferably 10 mm to 100 mm (for example, about 50 mm). By doing this, it is possible to suitably inhibit the expanded center part 14c4 from coming into contact with the corner part of the regulation surface R1a. Incidentally, a shape of the chamfering part is not restricted to the R part shown in FIG. 7. For example, the chamfering part might be a tapered part in which the corner part of the regulation surface is cut linearly.

### (3) Liquid injecting step S30

At the present step, the electrolytic solution 30 is injected via the electrolytic solution liquid injection hole 12a to the inside of the battery case 10 after the deformation. As an example, at the present step, the electrolytic solution 30 is injected according to a following procedure. At first, as shown in FIG. 8, a liquid injection nozzle P is inserted into the electrolytic solution liquid injection hole 12a. Then, the electrolytic solution 30 is injected from the liquid injection nozzle P to the inside of the battery case 10. At that time, in order to avoid the electrolytic solution 30 from gushing out from the electrolytic solution liquid injection hole 12a, the electrolytic solution 30 is dividedly and separately injected for several times while the electrolytic solution 30 is made to be osmosed to the inside of the electrode body 20. At that time, in the present embodiment, the battery case 10 is expanded at the capacity increasing step S20, and thus the electrolytic solution amount capable of being supplied for a single liquid injection is increased. Thus, it is possible to reduce the liquid injection number of the electrolytic solution 30 at the present step, so as to drastically improve a manufacture efficiency.

In addition, at the liquid injecting step S30 of the present embodiment, a decompress processing is performed to reduce the pressure inside the battery case 10. In particular, the liquid injecting step S30 of the present embodiment is performed under a state where the battery case 10 is accommodated in a decompressing chamber D. By doing this, the inside of the electrode body 20 (the electrode gap between the positive electrode and the negative electrode) becomes a negative pressure. When the electrolytic solution 30 is injected under this state, the electrolytic solution 30 is sucked to the inside of the electrode body 20 which has become the negative pressure. By doing this, it is possible to shorten the time required for making the electrolytic solution 30 be osmosed. Additionally, as shown in FIG. 8, when the decompress processing is performed inside the decompressing chamber D, it is possible to inhibit the inside of the battery case 10 from becoming the negative pressure more than the outside. As this result, it is possible to suppress the reduction in the inside capacity due to the contraction of the battery case 10.

Incidentally, the internal pressure of the battery case 10 during the decompress processing is preferably equal to or less than -50 kPa, or further preferably equal to or less than -80 kPa. By doing this, it is possible to suitably shorten the osmose time of the electrolytic solution 30. On the other hand, in a case where the inside of the decompressing chamber D is decompressed, a lower limit value of the pressure during the decompress processing is not particularly restricted unless the decompressing chamber D is broken. For example, the lower limit value of the pressure inside the decompressing chamber D might be equal to or more than -100 kPa. Incidentally, the decompress processing is not an essential processing of the liquid injecting step S30. For example, if an electrode body in which the electrolytic solution is easily osmosed (laminate electrode body, or the like) is used, the electrolytic solution might be injected without the decompress processing.

In addition, as described above, regarding the manufacturing method in accordance with the present embodiment, it is preferable that the inside capacity of the battery case 10 having increased at the capacity increasing step S20 is properly kept until the liquid injecting step S30 is started. As an example, the increase amount of the inside capacity of the battery case 10 at the liquid injecting step S30 start time is preferably equal to or more than 10 cm³, further preferably equal to or more than 20 cm³, or furthermore preferably equal to or more than 30 cm³. By doing this, it is possible to increase the electrolytic solution amount capable of being supplied by one-time liquid injection so as to improve the manufacture efficiency. Incidentally, a means for keeping the inside capacity of the battery case 10 is not particularly restricted. For example, as described above, by causing the plastic deformation on the battery case 10, it is possible to suppress the contraction of the battery case 10. In addition, a jig for keeping the shape of the battery case 10 might be used, so as to mechanically suppress the contraction of the battery case 10.

### (4) Sealing step S40

At the present step, the electrolytic solution liquid injection hole 12a of the battery case 10 after the liquid injection is sealed. By doing this, the secondary battery 1 (see FIG. 1) is constructed in which the electrode body 20 and the electrolytic solution 30 are accommodated inside the battery case 10 having been hermetically sealed. Incidentally, the sealing member 16 configured to seal the electrolytic solution liquid injection hole 12a is not to restrict the herein disclosed technique, and thus a conventionally known member can be used without particular restriction. As an example of this sealing member 16, it is possible to use a blind rivet or the like. In addition, after the electrolytic solution liquid injection hole 12a is sealed by the sealing member 16, the sealing member 16 might be welded to the battery case 10 (the sealing plate 12). By doing this, it is possible to further firmly fix the sealing member 16.

### (5) Summary

As described above, regarding the manufacturing method in accordance with the present embodiment, the capacity increasing step S20 is performed at which the gas is injected to an inside of the battery case 10 after the assembly so as to deform the battery case 10. By doing this, it is possible to induce the whole deformation on the battery case 10 due to the expansion caused from the inside, not a local deformation due to an external force. As this result, it is observed by an experiment that the inside capacity of the battery case 10 is remarkably increased. In particular, the increase amount of the inside capacity of the battery case due to the capacity increasing step S20 is observed to be 10 times or more in comparison with a situation where the side surface of the battery case is mechanically pulled as described in Patent Document 1. Accordingly, by the manufacturing method in accordance with the present embodiment, the electrolytic solution amount capable of being supplied by one liquid injection is remarkably increased, and thus it is possible to drastically enhance the manufacture efficiency.

Then, regarding the manufacturing method in accordance with the present embodiment, as shown in FIG. 6 and FIG. 7, at the capacity increasing step S20, the regulation jig R is used to regulate the deformation of a part of the side walls 14c, 14d. By doing this, it is possible to control the deformed position or the deformed amount of the battery case 10 at the capacity increasing step S20. Particularly, at the capacity increasing step S20 in the present embodiment, the top end regulating part R1_{U} of the regulation jig R is configured to abut on the top end part 14c1 of the first side wall 14c. By doing this, it is possible to regulate the deformation of the top end part 14c 1 of the first side wall 14c, so as to suitably inhibit the reduction in the sealing property of the battery case 10.

Above, Embodiment 1 of the manufacturing method disclosed herein is explained. However, it is sufficient for the capacity increasing step of the herein disclosed manufacturing method to regulate the deformation of a part of the side wall with the regulation jig, and the herein disclosed manufacturing method is not restricted only to the above described embodiment. Below, other embodiments (Embodiments 2 to 5) of the herein disclosed technique will be described. Incidentally, the manufacturing method in accordance with Embodiments 2 to 5 includes steps similar to the above described Embodiment 1, with an exception that a configuration of the regulation jig used at the capacity increasing step is different. Thus, below, only the configuration of the regulation jig used at the capacity increasing step is explained and explanations of the other steps are omitted.

### <Embodiment 2>

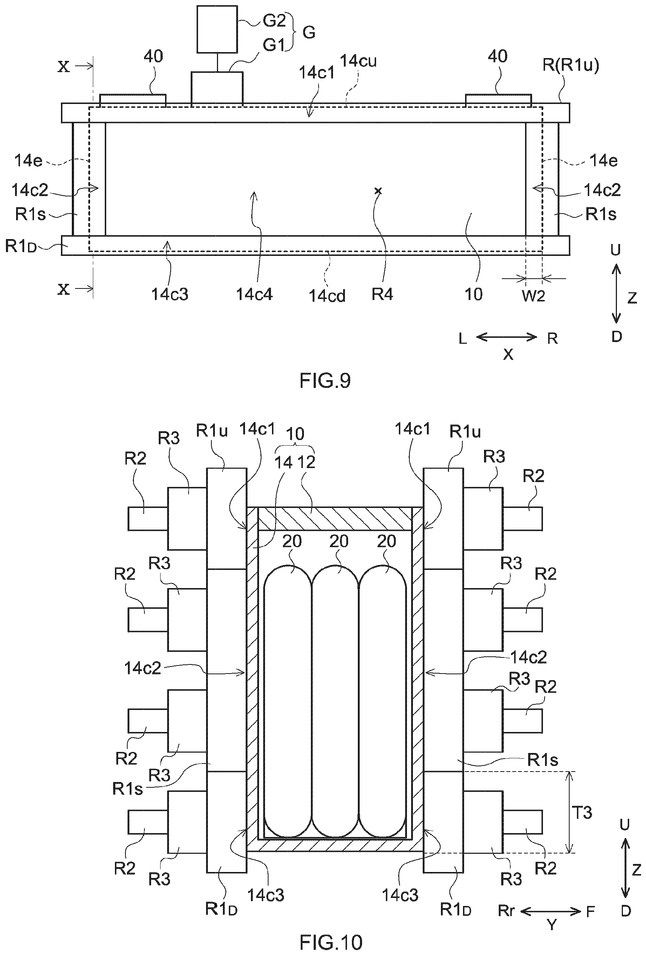

Below, Embodiment 2 of the herein disclosed manufacturing method will be described. FIG. 9 is a side view that is to explain the capacity increasing step of Embodiment 2. In addition, FIG. 10 is a X-X cross section view of FIG. 9.

As shown in FIG. 9, the regulating part R1 of the regulation jig R of Embodiment 2 includes the top end regulating part R1u, a side edge regulating part R1s, and a lower end regulating part R1_{D}. Below, each of them will be described.

### (1) Top end regulating part

The regulating part R1 of the regulation jig R in the present embodiment includes the top end regulating part R1_{U}, similarly to Embodiment 1. This top end regulating part R1_{U} is configured to abut on the top end part 14c1 of the first side wall 14c. By doing this, it is possible to regulate the deformation of the top end part 14c 1 of the first side wall 14c, so as to suitably inhibit the reduction in the sealing property of the battery case 10. Incidentally, the top end regulating part R1_{U} in the present embodiment has a configuration approximately similar to Embodiment 1, and a detailed explanation of it is omitted.

### (2) Side edge regulating part

The side edge regulating part R1s is a pair of regulating parts R1 abutting on the both-sides edge parts 14c2 of the first side wall 14c. The wording "both-sides edge parts 14c2 of the first side wall 14c" in the present specification represents areas respectively extending downward D from opposite ends of the top end 14cu of the first side wall 14c. These both-sides edge parts 14c2 include corner parts 14e of the outer case 14 and thus are hardly deformed even if the case internal pressure is risen. Regarding the side edge regulating part R1s in the present embodiment, by regulating the deformation of these both-sides edge parts 14c2, a stress of the internal pressure rise becomes easily applied to the center part 14c4. By doing this, it becomes easy to increase the inside capacity of the battery case 10.

Incidentally, a width size W2 of an area (the both-sides edge parts 14c2) where the side edge regulating part R1_{S} abuts on the first side wall 14c is preferably equal to or more than 1 mm, further preferably equal to or more than 1.5 mm, or furthermore preferably equal to or more than 2 mm. By doing this, it is possible to properly inhibit the deformation of both-sides edge parts 14c2, and to further suitably increase the inside capacity of the battery case 10. On the other hand, from a perspective of inhibiting the regulation by the side edge regulating part R1s from reaching even the center part 14c4, the width size W2 of each of the both-sides edge parts 14c2 is preferably equal to or less than 4 mm, further preferably equal to or less than 3.5 mm, or furthermore preferably equal to or less than 3 mm.

### (3) Lower end regulating part

The lower end regulating part R1_{D} is the regulating part R1 configured to abut on a lower end part 14c3 of the first side wall 14c. The wording "lower end part 14c3 of the first side wall 14c" in the present specification represents an area extending along a lower end 14cd of the first side wall 14c (along the width direction X in FIG. 9) to contain the lower end 14cd of the first side wall 14c. This lower end part 14c3 is also an area containing the corner part 14e of the outer case 14. Thus, by making the lower end regulating part R1_{D} regulate the deformation of the lower end part 14c3, it becomes easy to increase the inside capacity of the battery case 10.

Incidentally, the height size T3 of the area (the lower end part 14c3) where the lower end regulating part R1_{D} abuts on the first side wall 14c is preferably equal to or more than 2.5 mm, further preferably equal to or more than 5 mm, or furthermore preferably equal to or more than 7.5 mm. By doing this, it is possible to properly inhibit the deformation of the lower end part 14c3, so as to further suitably increase the inside capacity of the battery case 10. On the other hand, from a perspective of inhibiting the regulation by the lower end regulating part R1_{D} from reaching even the center part 14c4, the height size T3 of the lower end part 14c3 is preferably equal to or less than 17.5 mm, further preferably equal to or less than 15 mm, or furthermore preferably equal to or less than 12.5 mm.

### (4) Central opening part

Additionally, as shown in FIG. 9, the regulation jig R in the present embodiment includes a center opening part R4 opposed to the center part 14c4 of the first side wall 14c. In other words, the regulation jig R in the present embodiment is configured to make the regulating part R1 not abut on the center part 14c4 of the first side wall 14c, similarly to the above described Embodiment 1. By doing this, at the capacity increasing step S20, the center part 14c4 of the first side wall 14c can be properly expanded, and therefore it is possible to further suitably increase the inside capacity of the battery case 10.

### <Embodiment 3>

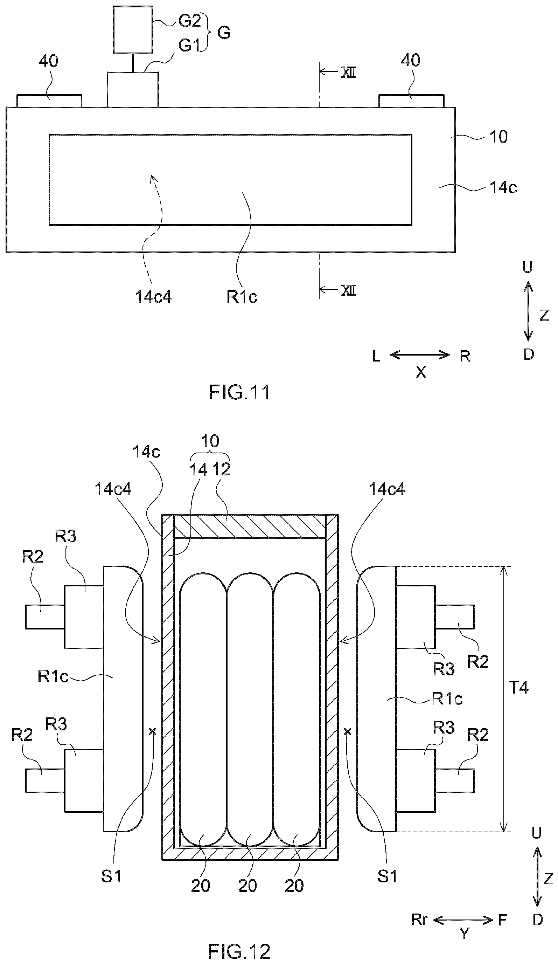

Next, Embodiment 3 of the herein disclosed manufacturing method will be described. FIG. 11 is a side view that is to explain the capacity increasing step of Embodiment 3. In addition, FIG. 12 is a XII-XII cross section view of FIG. 11.

As shown in FIG. 11, the regulation jig R in the present embodiment includes a center regulating part R1_{C} opposed to the center part 14c4 of the first side wall 14c. This center regulating part R1_{C} is configured to be capable of regulating the deformation, exceeding a predetermined reference displacement amount, of the center part 14c4 of the first side wall 14c. Particularly, as shown in FIG. 12, regarding the regulation jig R in the present embodiment, the center regulating part R1_{C} is fixed at a position where it tends to cause a predetermined interval S1 between the position and the first side wall 14c. By doing this, it is possible to inhibit the center part 14c4 of the first side wall 14c from being deformed more than the predetermined reference displacement amount (the width of the interval S1). As this result, it becomes easy to satisfy standards (shape, capacity) of the battery case 10 after the deformation, and thus it is possible to suppress a quality variation in the secondary batteries after the manufacture.

Incidentally, the height size T4 of the area (the center part 14c4) where the center regulating part R1_{C} abuts on the first side wall 14c is preferably equal to or more than 60 mm, further preferably equal to or more than 70 mm, or furthermore preferably equal to or more than 80 mm. By doing this, it is possible to inhibit the excess deformation of the center part 14c4, so as to suppress the quality variation in the secondary batteries after the manufacture. On the other hand, an upper limit value of the height size T3 of the lower end part 14c3, which is not particularly restricted, might be equal to or less than 120 mm, might be equal to or less than 100 mm, or might be equal to or less than 90 mm.

In addition, a width of the interval S1 between the center regulating part R1_{C} and the first side wall 14c (the reference displacement amount) is preferably equal to or more than 5 mm, further preferably equal to or more than 6 mm, or furthermore preferably equal to or more than 7 mm. By doing this, it is possible to sufficiently secure an increase amount of the inside capacity of the battery case 10 at the capacity increasing step S20. On the other hand, from a perspective of suppressing the quality variation in the secondary batteries after the manufacture, the width of the interval S1 is preferably equal to or less than 10 mm, further preferably equal to or less than 9 mm, or furthermore preferably equal to or less than 8 mm.

### <Embodiment 4>

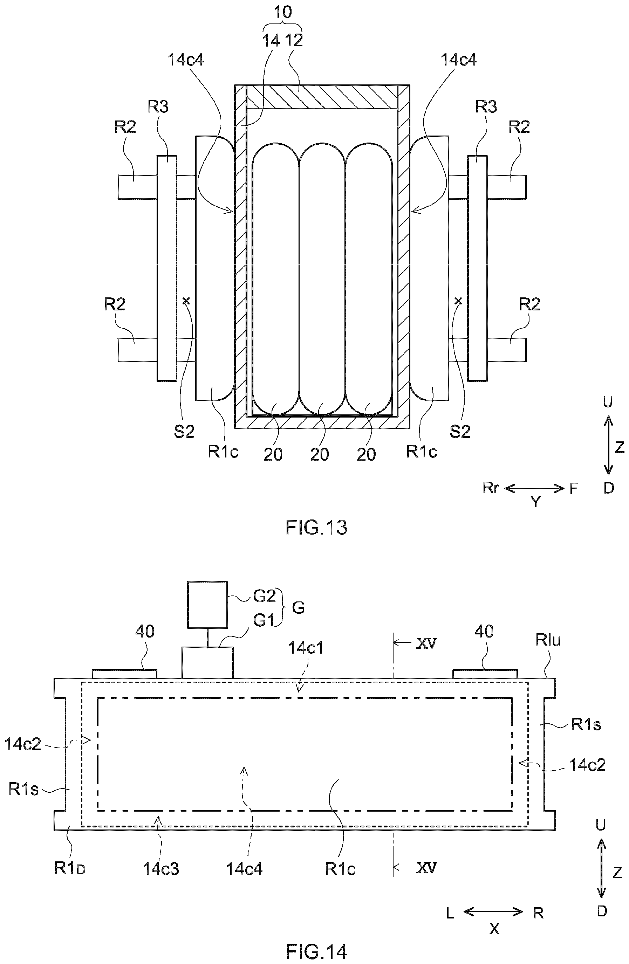

Next, Embodiment 4 of the herein disclosed manufacturing method will be described. FIG. 13 is a longitudinal cross section view that is to explain the capacity increasing step of Embodiment 4.

In the present embodiment, the regulation jig R includes the center regulating part R1_{C} that is configured to regulate the deformation, exceeding the predetermined reference displacement amount, of the center part 14c4 of the first side wall 14c, similarly to Embodiment 3. Incidentally, as shown in FIG. 13, regarding the present embodiment, the interval S1 (see FIG. 12) between the center regulating part R1_{C} and the first side wall 14c is not provided, and the center regulating part R1_{C} is configured to abut on the first side wall 14c. On the other hand, in the present embodiment, a gap S2 is provided between the center regulating part R1_{C} and the fixing part R3. By doing this, it is possible to make the center regulating part R1_{C} regulate the deform, exceeding the predetermined reference displacement amount (the width of the gap S2), of the center part 14c4 of the first side wall 14c.

### <Embodiment 5>

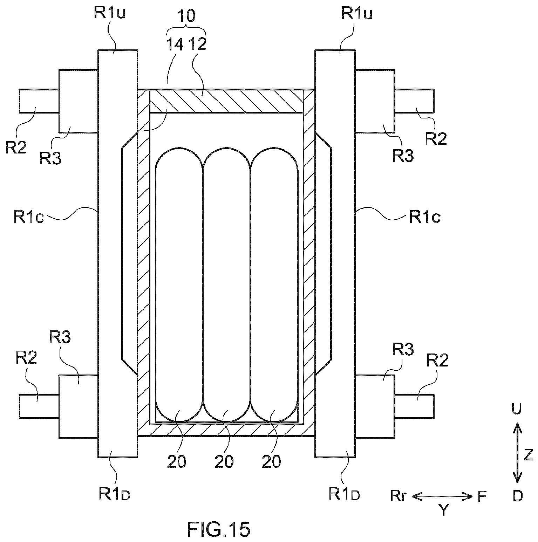

Next, Embodiment 5 of the herein disclosed manufacturing method will be described. FIG. 14 is a side view that is to explain the capacity increasing step of Embodiment 5. In addition, FIG. 15 is a XV-XV cross section view of FIG. 14.

As shown in FIG. 14 and FIG. 15, the regulating part R1 in the present embodiment is configured by integrating the top end regulating part R1u, the side edge regulating part R1s, the lower end regulating part R1_{D}, and the center regulating part R1_{C}. Even in a case of applying a configuration that plural regulating parts are integrated as described above, it is possible to properly induce the effect of the herein disclosed technique. Then, the regulation jig R in the present embodiment allows the deformation, being equal to or less than the reference displacement amount, of the center part 14c4 but regulates the deformation of the other areas (the top end part 14c1, the both-sides edge parts 14c2, and the lower end part 14c3). By doing this, it becomes easier to satisfy the standards (shape, inside capacity) of the battery case 10 after the deformation, and thus it is possible to further suitably suppress the quality variation in the secondary batteries after the manufacture.

### <Another embodiment>

Above, Embodiments 1 to 5 of the herein disclosed manufacturing method are explained. Incidentally, the herein disclosed manufacturing method is not restricted to the above described embodiments, and various matters can be changed suitably. Below, another example of the matter capable of being changed from the above described embodiments will be described.

### (1) Secondary battery of manufacture target

The herein disclosed manufacturing method can be applied widely to the manufactures of secondary batteries having various structures, as not restricted to the secondary battery 1 having the configuration described above. For example, the shape of the electrode body is not to restrict the herein disclosed technique. For example, in the above described embodiment, the wound electrode body is used as the electrode body 20. However, the electrode body might be a laminate electrode body in which plural rectangular electrode sheets are laminated via separators.

In addition, regarding the secondary battery 1 of the above described embodiment, the battery case 10 formed in a flat rectangular parallelepiped shape is used. However, the shape of the battery case is not to restrict the herein disclosed technique. For example, the shape of the battery case might be a cube shape, or might be a cylindrical shape. At that time, it is preferable that the regulating part of the regulation jig has the regulation surface corresponding to the shape of the battery case. For example, regarding the battery case 10 formed in the rectangular parallelepiped shape as shown by FIG. 1, the first side wall 14c is mainly deformed at the capacity increasing step S20. Thus, the regulating part R1 of the regulation jig R of Embodiments 1 to 5 includes the regulation surface R1a opposed to the first side wall 14c. On the other hand, regarding the battery case formed in the cube shape, there is a possibility that respective 4 side walls are uniformly deformed (expanded) at the capacity increasing step. Thus, in a situation where the secondary battery including the battery case formed in the cube shape is manufactured, it is preferable that the regulating part of the regulation jig has regulation surfaces respectively opposed to the 4 side walls of the battery case. Additionally, in a situation where the secondary battery including the battery case formed in the cylindrical shape is manufactured, it is preferable that the regulation jig includes an annular (ring-shaped) regulating member surrounding an outer periphery of the cylindrical side wall.

### (2) Drying step

The herein disclosed manufacturing method might include steps other than the 4 steps S10 to S40 shown in FIG. 3. For example, after the battery case assembling step S10 is performed and before the liquid injecting step S30 is started, a drying step might be performed to dry the electrode body inside the battery case. By doing this, it is possible to inhibit the performance reduction (a capacity reduction, an output reduction, or the like) due to the moisture invaded into the electrode body. Incidentally, at the drying step, it is preferable that heating is performed while the inside of the battery case is decompressed. By doing this, it is possible to efficiently remove the moisture inside the electrode body. For example, a heating temperature at the drying step is preferably equal to or more than 80°C, further preferably equal to or more than 90°C, or preferably in particular equal to or more than 100°C. By doing this, it is possible to suitably remove the moisture inside the electrode body. In addition, the heating temperature is preferably equal to or less than 200°C, further preferably equal to or less than 150°C, or preferably in particular equal to or less than 120°C. By doing this, it is possible to suppress a degradation on the resin-made member (a separator, an insulation film, or the like). In addition, it is preferable that the pressure inside the battery case during the drying step is decompressed to be -6 Pa to -10 Pa. By doing this, it is possible to easily remove the evaporated moisture.

Incidentally, the drying step can be performed without particular restriction, if it is performed after the battery case assembling step S10 is performed and before the liquid injecting step S30 is started, as described above. However, in consideration of a dry efficiency, it is preferable that the drying step is performed after the capacity increasing step S20. In particular, regarding the battery case after expanded at the capacity increasing step S20, an air permeability of the internal space is enhanced. Thus, by performing the drying step after the capacity increasing step S20, it becomes easy to exhaust the moisture, having been evaporated by heating, to the outside of the battery case.

### (3) Initial charging step

In addition, regarding the herein disclosed manufacturing method, an initial charging step might be performed between the liquid injecting step S30 and the sealing step S40. At this initial charging step, an external charge apparatus is connected to the electrode terminal 40 under a state where the electrolytic solution liquid injection hole 12a is opened, and then the charge is performed to reach a predetermined voltage at a room temperature (for example, 20°C to 30°C extent). By doing this, a part of the electrolytic solution 30 is decomposed so as to generate a large amount of decomposition gas. By performing this initial charge before the sealing step S40, it is possible to inhibit the gas exhaust valve from being operated during the initial charge. Incidentally, a charge condition at the initial charging step, which is not particularly restricted, can be suitably changed according to a standard of the manufacture target (the secondary battery). Additionally, in a case where the initial charging step has been performed, it is preferable that a decompression processing is performed before the sealing step S40. By doing this, it is possible to properly exhaust the decomposition gas generated at the initial charging step.

### (4) Leak inspecting step

In the herein disclosed manufacturing method, it is preferable that a leak inspecting step is performed after the capacity increasing step S20 is performed and before the sealing step S40 is started (suitably, just after the capacity increasing step S20). By doing this, it is possible to detect a breakage of the battery case (the gas exhaust valve, the join portion with the sealing plate and the outer case, or the like) caused by the capacity increasing step S20. As an example of a particular procedure of the leak inspecting step, it is possible to use a following procedure. At the leak inspecting step, firstly, an inspection gas (for example, helium gas) for the leak inspection is filled inside the battery case. Then, by using an inspection apparatus configured to detect the inspection gas, a leakage of the inspection gas from the inside of the battery case is inspected. By doing this, it is possible to perform the inspection for presence or absence of the breakage of the battery case or a breakage position. Incidentally, the leak inspecting step can be included in the above described capacity increasing step S20. In particular, the capacity increasing step S20 might use the inspection gas, as the gas to be injected into the battery case, and might make the battery case be deformed while the inspection for the leakage of the inspection gas is performed by the inspection apparatus. By doing this, it is possible to expand the battery case while observing the presence or absence of the breakage.

Above, the embodiments of the herein disclosed technique have been explained. However, the above described explanation is merely an illustration, and is not to restrict the scope of claims. The technique recited in the scope of claims includes contents in which the specific examples illustrated in the above explanation are variously deformed or changed.

In other words, the herein disclosed technique contains contents of [Item 1] to [Item 8].

### [Item 1]

1. A manufacturing method of a secondary battery comprising an electrode body comprising a positive electrode and a negative electrode, comprises an electrolytic solution, and comprises a battery case configured to accommodate the electrode body and the electrolytic solution,
   the battery case comprises:
      an outer case including a bottom part formed in a plate shape, a side wall extending upward from an outer peripheral edge of the bottom part, and an upper surface opening surrounded by a top end of the side wall; and
      a sealing plate configured to seal the upper surface opening and provided with an electrolytic solution liquid injection hole,
   the manufacturing method, comprising:
      a battery case assembling step for sealing the upper surface opening by the sealing plate under a state where the electrode body is arranged inside the outer case, so as to assemble the battery case;
      a capacity increasing step for increasing an inside capacity of the battery case by injecting a gas via the electrolytic solution liquid injection hole to an inside of the battery case having been assembled so as to deform the battery case;
      a liquid injecting step for injecting the electrolytic solution via the electrolytic solution liquid injection hole to the inside of the battery case having been deformed; and
      a sealing step for sealing the electrolytic solution liquid injection hole of the battery case into which the electrolytic solution is injected, wherein
   in the capacity increasing step, a regulation jig is used to regulate a deformation of a part of the side wall.

### [Item 2]

The manufacturing method recited in item 1, wherein
the bottom part is a long rectangular plate-shaped member, and
the side wall comprises a pair of first side walls extending upward from long sides of the bottom part and comprises a pair of second side walls extending upward from short sides of the bottom part.

### [Item 3]

The manufacturing method recited in item 2, wherein
the regulation jig comprises a top end regulating part configured to abut on a top end part of the first side wall that is an area extending along a top end of the first side wall to contain the top end of the first side wall.

### [Item 4]

The manufacturing method recited in item 2 or 3, wherein
the regulation jig comprises a pair of side edge regulating parts configured to abut on both-sides edge parts of the first side wall that are areas extending downward respectively from opposite ends of a top end of the first side wall.

### [Item 5]

The manufacturing method recited in any one of items 2 to 4, wherein
the regulation jig comprises a lower end regulating part configured to abut on a lower end part of the first side wall that is an area extending along a lower end of the first side wall to contain the lower end of the first side wall.

### [Item 6]

The manufacturing method recited in any one of items 2 to 5, wherein
the regulation jig comprises a regulation surface opposed to the first side wall, and
the regulation surface is provided with a chamfering part formed on a corner part at a position of a center part side of the first side wall.

### [Item 7]

The manufacturing method recited in any one of items 2 to 6, wherein
the regulation jig comprises a center opening part opposed to a center part of the first side wall.

### [Item 8]

The manufacturing method recited in any one of items 2 to 6, wherein the regulation jig comprises a center regulating part that is opposed to a center part of the first side wall and that is configured to regulate a deformation, exceeding a predetermined reference displacement amount, of the center part of the first side wall.

## Claims

1. A manufacturing method of a secondary battery (1) comprising an electrode body (20) comprising a positive electrode and a negative electrode, comprises an electrolytic solution (30), and comprises a battery case (10) configured to accommodate the electrode body (20) and the electrolytic solution (30),
the battery case (10) comprises:
an outer case (14) including a bottom part (14b) formed in a plate shape, a side wall (14c, 14d) extending upward from an outer peripheral edge of the bottom part (14b), and an upper surface opening (14a) surrounded by a top end of the side wall (14c, 14d); and
a sealing plate (12) configured to seal the upper surface opening (14a) and provided with an electrolytic solution liquid injection hole (12a),
the manufacturing method, comprising:
a battery case assembling step for sealing the upper surface opening (14a) by the sealing plate (12) under a state where the electrode body (20) is arranged inside the outer case (14), so as to assemble the battery case (10);
a capacity increasing step for increasing an inside capacity of the battery case (10) by injecting a gas via the electrolytic solution liquid injection hole (12a) to an inside of the battery case (10) having been assembled so as to deform the battery case (10);
a liquid injecting step for injecting the electrolytic solution (30) via the electrolytic solution liquid injection hole (12a) to the inside of the battery case (10) having been deformed; and
a sealing step for sealing the electrolytic solution liquid injection hole (12a) of the battery case (10) into which the electrolytic solution (30) is injected, wherein
in the capacity increasing step, a regulation jig (R) is used to regulate a deformation of a part of the side wall (14c, 14d).

2. The manufacturing method according to claim 1, wherein
the bottom part (14b) is a long rectangular plate-shaped member, and
the side wall (14c, 14d) comprises a pair of first side walls (14c) extending upward from long sides of the bottom part (14b) and comprises a pair of second side walls (14d) extending upward from short sides of the bottom part (14b).

3. The manufacturing method according to claim 2, wherein
the regulation jig (R) comprises a top end regulating part (R1U) configured to abut on a top end part (14c1) of the first side wall (14c) that is an area extending along a top end of the first side wall (14c) to contain the top end of the first side wall (14c).

4. The manufacturing method according to claim 2 or 3, wherein
the regulation jig (R) comprises a pair of side edge regulating parts (R1S) configured to abut on both-sides edge parts (14c2) of the first side wall (14c) that are areas extending downward respectively from opposite ends of a top end of the first side wall (14c).

5. The manufacturing method according to any one of claims 2 to 4, wherein
the regulation jig (R) comprises a lower end regulating part (R1D) configured to abut on a lower end part (14c3) of the first side wall (14c) that is an area extending along a lower end of the first side wall (14c) to contain the lower end of the first side wall (14c).

6. The manufacturing method according any one of claims 2 to 5, wherein
the regulation jig (R) comprises a regulation surface (R1a) opposed to the first side wall (14c), and
the regulation surface (R1a) is provided with a chamfering part (R1b) formed on a corner part at a position of a center part (14c4) side of the first side wall (14c).

7. The manufacturing method according to any one of claims 2 to 6, wherein
the regulation jig (R) comprises a center opening part (R4) opposed to a center part (14c4) of the first side wall (14c).

8. The manufacturing method according to any one of claims 2 to 6, wherein
the regulation jig (R) comprises a center regulating part (R1C) that is opposed to a center part (14c4) of the first side wall (14c) and that is configured to regulate a deformation, exceeding a predetermined reference displacement amount, of the center part (14c4) of the first side wall (14c).
